# FASCICULE DE BREVET EUROPEEN

(11) **EP 3 406 006 B1**
(45) Date de publication et mention de la délivrance du brevet: **15.12.2021**
(21) Numéro de dépôt: 17706845.9
(22) Date de dépôt: 20.01.2017
(51) Int. Cl.: H01S 3/067, H01S 3/108, H01S 3/30, G02F 1/35, H01S 3/00, G01N 21/65, H01S 3/16

(54) **DISPOSITIF DE GÉNÉRATION D'UN FAISCEAU DE PHOTONS POLYCHROMATIQUE ET D'ÉNERGIE SENSIBLEMENT CONSTANTE**
VORRICHTUNG ZUR ERZEUGUNG EINES POLYCHROMATISCHEN PHOTONENSTRAHLS MIT IM WESENTLICHEN KONSTANTER ENERGIE
DEVICE FOR GENERATING A POLYCHROMATIC PHOTON BEAM HAVING SUBSTANTIALLY CONSTANT ENERGY

(30) Priorité: 22.01.2016 FR 1650522
(43) Date de publication de la demande: 28.11.2018
(73) Titulaire: CENTRE NATIONAL DE LA RECHERCHE SCIENTIFIQUE, 75016 Paris (FR); Université de Limoges, 87000 Limoges (FR)
(72) Inventeur: LOUOT, Christophe, 87100 Limoges (FR); PAGNOUX, Dominique, 87100 Limoges (FR); KRUPA, Katarzyna, 25122 Brescia (IT); SHALABY, Badr, 87100 Limoges (FR); LABRUYÈRE, Alexis, 87100 Limoges (FR); TONELLO, Alessandro, 87000 Limoges (FR); COUDERC, Vincent, 87430 Verneuil-sur-Vienne (FR)
(74) Mandataire: Marks & Clerk France
(86) Numéro de dépôt international: PCT/FR2017/050126
(87) Numéro de publication internationale: WO 2017/125693

(56) Documents cités:
- EP-A2- 1 426 795
- WO-A1-2010/023438
- US-A1- 2014 056 023
- MUSSOT A ET AL: "Generation of a broadband single-mode supercontinuum in a conventional dispersion-shifted fiber by use of a subnanosecond microchip laser", OPTICS LETTERS, OPTICAL SOCIETY OF AMERICA, US, vol. 28, no. 19, 1 novembre 2003 (2003-11-01), pages 1820-1822, XP002529811, ISSN: 0146-9592, DOI: 10.1364/OL.28.001820
- OKUNO M ET AL: "ULTRABROADBAND (>2000 CM-1) MULTIPLEX COHERENT ANTI-STOKES RAMAN SCATTERING SPECTROSCOPY USING A SUBNANOSECOND SUPERCONTINUUM LIGHT SOURCE", OPTICS LETTERS, OPTICAL SOCIETY OF AMERICA, US, vol. 32, no. 20, 15 octobre 2007 (2007-10-15), pages 3050-3052, XP001508570, ISSN: 0146-9592, DOI: 10.1364/OL.32.003050
- T. ERNEUX ET AL: "The pulse shape of a passively Q-switched microchip laser", EUROPEAN PHYSICAL JOURNAL D: ATOMS, MOLECULES, CLUSTERS ANDOPTICAL PHYSICS, vol. 10, no. 3, 1 January 2000 (2000-01-01), pages 423-431, XP055713694, FR ISSN: 1434-6060, DOI: 10.1007/s100530050565
- J. J. ZAYHOWSKI ET AL: "Diode-pumped passively Q-switched picosecond microchip lasers", OPTICS LETTERS, vol. 19, no. 18, 15 September 1994 (1994-09-15), page 1427, XP055713828, US ISSN: 0146-9592, DOI: 10.1364/OL.19.001427
- G J SPÜHLER ET AL: "Experimentally confirmed design guidelines for passively Q-switched microchip lasers using semiconductor saturable absorbers", JOURNAL OF THE OPTICAL SOCIETY OF AMERICA B, vol. 16, no. 3, 1 March 1999 (1999-03-01), pages 376-389, XP055713818,

## Description

### Domaine technique

L'invention concerne les dispositifs chargés de générer un faisceau de photons polychromatique, et les systèmes d'analyse qui utilisent de tels dispositifs.

### État de la technique

Dans certains domaines, comme par exemple celui de l'analyse d'échantillons (éventuellement médicaux), on a besoin de sources lasers qui délivrent un faisceau de photons ayant des longueurs d'onde réparties sensiblement continûment sur une largeur spectrale importante, typiquement de quelques dizaines de nanomètres à quelques centaines de nanomètres. De telles sources polychromatiques sont fréquemment appelées continua.

Comme le sait l'homme de l'art, ces sources sont réalisées à partir d'une interaction lumière-matière qui met en œuvre des effets non linéaires. Elles comprennent fréquemment au moins une source laser impulsionnelle délivrant des photons « primaires » présentant une longueur d'onde « primaire », et une fibre optique micro-structurée de manière à produire un faisceau de sortie comprenant des photons secondaires présentant plusieurs longueurs d'onde « secondaires » à partir des photons primaires. On entend ici par « fibre optique micro-structurée » une fibre optique, généralement en silice, et dans laquelle sont définies des microstructures destinées à confiner la puissance lumineuse, pour augmenter l'interaction lumière-matière et ainsi améliorer la conversion de la longueur d'onde primaire en un grand nombre de longueurs d'onde secondaires. Par exemple, ces microstructures peuvent constituer un réseau de Bragg transverse à la direction de propagation de la lumière dans la fibre optique et propre à modifier la loi de dispersion vue par la lumière.

De telles sources à fibre optique micro-structurée permettent avantageusement d'obtenir des rayonnements stables avec une largeur spectrale allant du proche ultraviolet (ou UV) (environ 350 nm) à l'infrarouge moyen (typiquement 5 µm). Les fibres optiques micro-structurées en silice sont par exemple limitées dans l'infrarouge vers 2,4 µm.

Cependant, les fibres optiques micro-structurées non linéaires ont un faible diamètre de cœur et donc, en présence d'un fort confinement de l'énergie, le seuil de dommage de leur matériau est très vite atteint. De ce fait, ces sources à fibre optique micro-structurée ne permettent pas d'obtenir des énergies de sortie forte. De plus, le pompage des fibres optiques micro-structurées dans le domaine de dispersion normal induit une génération non continue du spectre de conversion par effet Raman stimulé. Enfin, la conversion de longueurs d'onde dans le domaine de dispersion anormal, en régimes d'excitation picoseconde et nanoseconde, est dominée par des effets solitoniques qui induisent un spectrogramme ne permettant pas de discriminer dans le temps les différentes longueurs d'onde secondaires du faisceau de sortie qui sont générées à des endroits différents dans le profil temporel de l'impulsion utilisée. Dans ces conditions, il est impossible d'utiliser ces sources dans certaines applications, comme par exemple la « micro-spectroscopie CARS multiplex (« Coherent AntiStokes Raman Scattering » - diffusion Raman antistokes cohérente multiplex) » sans introduire en complément une analyse spectroscopique du rayonnement de fluorescence. Cette micro-spectroscopie CARS multiplex est notamment utilisée dans le domaine de l'imagerie pour identifier et localiser des espèces chimiques spécifiques au sein d'un échantillon.

Le document Mussot, Arnaud, et al. "Génération of a broadband single-mode supercontinuum in a conventional dispersion-shifted fiber by use of a subnanosecond microchiplaser." Optics Letters 28.19 (2003): 1820-1822 divulgue divulgue un dispositif de génération de photons polychromatique comprenant une source laser impulsionnelle (microchip Q-switched laser en Nd :YAG), des moyens de mise en forme permettant de délivrer un faisceau focalisé avec une polarisation choisie dans une fibre monomode adaptée pour générer un supercontinuum. Cependant, ce dispositif ne décrit pas comment contrôler la répartition temporelle des longueurs dans l'impulsion en sortie de dispositif.

### Description de l'invention

L'invention a notamment pour but d'améliorer la situation.

L'invention est définie dans la revendication 1. Des modes de réalisations avantageux sont définis dans les revendications dépendantes.

Elle propose notamment à cet effet un dispositif, destiné à générer un faisceau de photons polychromatique, et comprenant une source laser impulsionnelle propre à délivrer des photons primaires présentant au moins une longueur d'onde, des moyens de mise en forme propres à agir sur les photons primaires pour délivrer un faisceau d'entrée focalisé et ayant une polarisation choisie, et une fibre optique agencée pour produire un faisceau de sortie polychromatique comprenant des photons secondaires présentant plusieurs longueurs d'onde à partir du faisceau d'entrée.

Ce dispositif de génération se caractérise par le fait que sa source laser impulsionnelle est propre à délivrer les photons primaires dans des impulsions ayant une dissymétrie temporelle qui est propre à induire des photons secondaires présentant différentes longueurs d'onde résultant d'une cascade de conversions Raman, et constituant un faisceau de sortie à spectre large et ayant une énergie répartie de manière sensiblement constante. Ledit dispositif se caractérise en outre par le fait qu'il comprend, entre ladite fibre optique et lesdits moyens de mise en forme, des moyens de désymétrisation propres à augmenter ladite dissymétrie temporelle dudit faisceau d'entrée.

Chaque longueur d'onde secondaire, créée par effet non linéaire, possède alors un temps d'arrivée spécifique pendant la durée de l'impulsion de pompe (photons primaires), ce qui permet de la caractériser par un simple retard. Cette répartition dans le temps, des photons secondaires, est issue d'une dynamique non linéaire exacerbée par la dissymétrie de l'impulsion de pompe.

Ainsi, en utilisant une fibre optique non micro-structurée (par exemple de type standard (tel qu'HI 980) pour disposer d'un cœur plus large), et pompée par des impulsions à dissymétrie temporelle, on peut obtenir un continuum de photons d'énergie dont l'amplitude du spectre est sensiblement constante.

Le dispositif selon l'invention peut comporter d'autres caractéristiques qui peuvent être prises séparément ou en combinaison, et notamment :
- la source laser impulsionnelle peut fournir une densité de puissance par mètre de fibre optique qui induit une génération non linéaire des photons secondaires échelonnée dans le temps en fonction de leurs longueurs d'onde respectives ;
- par exemple la densité de puissance par mètre de fibre optique peut être supérieure à 0,2 kW/µm²/m ;
- il peut comprendre des moyens de filtrage installés en aval de la fibre optique et propres à ne laisser passer que des photons secondaires ayant des longueurs d'onde comprises dans un intervalle prédéfini afin de délivrer un faisceau de sortie filtré sous la forme d'impulsions d'une durée égale à leur différence d'échelonnement dans le temps ;
- la fibre optique peut être de type dit monomode ou bien de type dit multimode ;
- la source laser impulsionnelle peut être propre à délivrer les photons primaires dans des impulsions ayant une durée comprise entre quelques centièmes de nanosecondes et quelques dizaines de nanosecondes;
- il peut comprendre une cavité résonnante comprenant un miroir d'entrée de type dichroïque et propre à recevoir le faisceau d'entrée, et un miroir de sortie propre à délivrer le faisceau de sortie ;
- la fibre optique peut être dopée en ions de terre rare. Dans ce cas, il comprend également une source laser auxiliaire propre à injecter dans la fibre optique des photons auxiliaires destinés à interagir avec les ions de terre rare pour induire une amplification des photons primaires permettant alors une augmentation de la conversion vers les photons secondaires;
- en variante, la fibre optique peut être dopée en ions propres à exacerber des effets non linéaires dans la fibre optique pour induire une augmentation de la conversion vers les photons secondaires.

L'invention propose également un système d'analyse d'échantillon comprenant au moins un dispositif de génération du type de celui présenté ci-avant et propre à fournir un faisceau de sortie polychromatique pour analyser l'échantillon.

Par exemple, un tel système peut être propre à effectuer une analyse de l'échantillon par diffusion Raman antistokes cohérente multiplex (ou CARS (« Coherent AntiStokes Raman Scattering »)). Dans ce cas, ce système peut également comprendre un détecteur temporel.

### Brève description des figures

L'invention sera mieux comprise à la lecture de la description qui suit, faite uniquement à titre d'exemple, et en référence aux figures en annexe dans lesquelles :
- La figure 1 illustre de façon schématique et fonctionnelle un premier exemple de réalisation d'un dispositif de génération ne correspondant pas à l'invention ;
- la figure 2 illustre de façon schématique au sein d'un diagramme un exemple d'évolution de la puissance (P en dB) du faisceau de sortie d'un dispositif de génération en fonction de la longueur d'onde (λ en nm),
- la figure 3 illustre de façon schématique au sein d'un diagramme, un exemple d'évolution de la puissance du faisceau de sortie d'un dispositif de génération dans les domaines du temps et des longueurs d'onde,
- la figure 4 illustre de façon schématique et fonctionnelle un exemple de réalisation d'un dispositif de génération selon l'invention,
- la figure 5 illustre de façon schématique et fonctionnelle un troisième exemple de réalisation d'un dispositif de génération ne correspondant pas à l'invention, et
- la figure 6 illustre de façon schématique et fonctionnelle un quatrième exemple de réalisation d'un dispositif de génération ne correspondant pas à l'invention.

### Modes de réalisation

L'invention a notamment pour but de proposer un dispositif DG destiné à générer un faisceau de photons FS polychromatique et dont l'énergie (ou puissance) est répartie de manière sensiblement constante.

Dans ce qui suit, on considère à titre d'exemple non limitatif que le dispositif de génération DG est destiné à faire partie d'un système d'analyse d'échantillon (éventuellement de type médical). Mais l'invention n'est pas limitée à ce type de système. En effet, elle concerne tout système devant comprendre au moins un dispositif pouvant générer un faisceau de photons polychromatique et dont l'énergie (ou puissance) est sensiblement constante.

Par ailleurs, on considère dans ce qui suit, à titre d'exemple non limitatif, que le système d'analyse est propre à effectuer des analyses d'échantillons par diffusion Raman antistokes cohérente multiplex (ou micro-spectroscopie CARS multiplex (« Coherent AntiStokes Raman Scattering »)). De tels échantillons peuvent, par exemple, être sanguins. Mais l'invention n'est pas limitée à ce type d'analyse.

D'une manière générale, l'invention concerne de nombreux domaines, et notamment la biophotonique (et en particulier le diagnostic cellulaire), la tomographie cohérente, la cytométrie en flux, le dépistage d'éléments chimiques à distance (par exemple pour la sécurité aérienne), le contrôle de personnes (par exemple dans le domaine médical), la détection d'explosifs et la détection de bactéries.

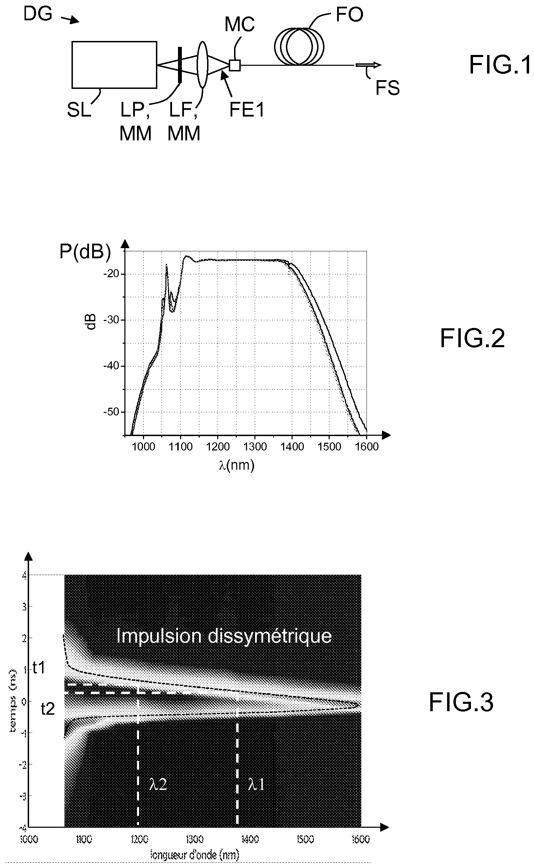

On a schématiquement représenté sur les figures 1 et 4 à 6 quatre exemples de réalisation non limitatifs d'un dispositif de génération DG selon l'invention.

Comme illustré, un dispositif (de génération) DG comprend au moins une source laser impulsionnelle SL, des moyens de mise en forme MM, et une fibre optique FO dépourvue de microstructure.

La source laser impulsionnelle (ou laser de pompe) SL est propre à délivrer des photons dits « primaires » qui présentent une longueur d'onde ci-après dite « primaire ». Cette longueur d'onde primaire (ou de pompe) est choisie en fonction des besoins applicatifs, et donc de la bande spectrale désirée. Par conséquent, elle pourra appartenir au domaine de l'infrarouge (ou IR), du visible ou de l'ultraviolet (ou UV). Ces photons primaires peuvent également appartenir à plusieurs domaines comme par exemple une longueur d'onde infrarouge et sa seconde harmonique.

De plus, la source laser impulsionnelle SL est propre à délivrer les photons primaires dans des impulsions qui ont une dissymétrie temporelle. On reviendra plus loin sur l'intérêt de cette dissymétrie temporelle.

Par exemple, cette source laser impulsionnelle SL peut offrir une forte puissance crête. Dans ce cas, elle pourra comprendre, par exemple, un laser de type Nd : YAG produisant des photons de 1064 nm avec des impulsions allant de 10 ps à 10 ns.

Cette dissymétrie temporelle peut être obtenue grâce à un absorbant saturable introduit dans la cavité laser de la source laser SL et à la dynamique d'évolution du gain laser dans cette cavité laser. Le front de montée de l'impulsion est fixé par le gain laser et la vitesse de saturation de l'absorbant tandis que le front de descente est contrôlé par la dynamique d'appauvrissement du gain laser et la réouverture de l'absorbant saturable. La dynamique de saturation et de réouverture étant différentes, on obtient une impulsion dissymétrique.

Les moyens de mise en forme MM sont propres à agir sur les photons primaires pour délivrer un faisceau d'entrée FE focalisé et ayant une polarisation choisie. Cette polarisation (ou direction d'oscillation du champ) est fixée par la source laser SL. On peut la tourner, ou la modifier, avec une lame demi-onde ou une lame quart-d'onde à l'extérieur de la cavité laser de la source laser SL afin de favoriser certain effets non linéaires. L'orientation/modification de la polarisation vis-à-vis de la fibre optique FO permet donc de modifier (modérément) le spectre final.

Par exemple, et comme illustré, ces moyens de mise en forme MM peuvent comprendre, en aval de la source laser impulsionnelle SL par rapport au sens de propagation des photons primaires, au moins une lame d'onde LP propre à conférer la polarisation choisie aux photons primaires et une lentille de focalisation LF propre à focaliser les photons primaires sur l'entrée de la fibre optique FO. On notera que la lame d'onde LP pourrait être placée après la lentille de focalisation LF. Par exemple, et à partir de la polarisation initiale délivrée par la source laser SL, la polarisation conférée par la lame d'onde LP peut être circulaire, elliptique ou linéaire.

La fibre optique FO est propre à recevoir le faisceau d'entrée FE et est agencée pour produire un faisceau de sortie FS polychromatique comprenant des photons dits « secondaires » présentant plusieurs longueurs d'onde à partir du faisceau d'entrée FE. Par exemple, et comme illustré non limitativement, l'extrémité d'entrée de la fibre optique FO peut être solidarisée fixement à des moyens de couplage MC recevant sur une entrée le faisceau d'entrée FE focalisé. Ces moyens de couplage MC peuvent, par exemple, être agencés sous la forme d'un coupleur à microlentille chargé de refocaliser plus précisément le faisceau d'entrée FE focalisé dans le cœur de l'extrémité d'entrée de la fibre optique FO.

Cette fibre optique FO est de préférence de type standard, afin de posséder un cœur plus large que celui des fibres optiques micro-structurées non linéaire. Elle peut, par exemple, être réalisée en silice ou en un autre matériau comme par exemple le tellure, les chalcogénures, ou les verres fluorés, et peut être éventuellement dopée. Elle peut, par exemple, être de type HI 980 ou de type HI1060.

On notera que pour obtenir l'effet décrit plus loin, il faut que la longueur d'onde de pompe (de la source laser SL) et que la majeure partie du spectre généré en sortie du dispositif DG soit en régime de dispersion normal. En effet, dans un régime de dispersion anormal les effets solitoniques brouillent la répartition spectro-temporelle.

La dissymétrie temporelle des impulsions délivrées par la source laser impulsionnelle SL est propre à induire dans la fibre optique FO des photons dits « secondaires » qui présentent différentes longueurs d'onde résultant d'une cascade de conversions Raman, et qui constituent un faisceau de sortie FS à spectre large et ayant une énergie répartie de manière sensiblement constante.

Chaque longueur d'onde possède alors un temps d'arrivée donné qui permet son identification par un simple retard temporel au sein de l'impulsion laser initiale.

La propagation des photons primaires et secondaires dans le cœur de la fibre optique FO et la « duplication » de ces photons primaires et secondaires par conversion Raman sur différentes ondes de Stokes provoque au fur et à mesure de la propagation un élargissement du spectre de raies Stokes de manière homogène, ce qui permet une redistribution équilibrée de l'énergie sur une large gamme de longueurs d'onde et donc l'obtention d'une énergie sensiblement constante quelle que soit la longueur d'onde des photons secondaires du faisceau de sortie FS. En d'autres termes, le dispositif de génération DG constitue une source laser polychromatique à spectre (ultra)plat.

Sur la figure 2 se trouve illustré un exemple d'évolution de la puissance (en dB) du faisceau de sortie FS du dispositif de génération DG en fonction de la longueur d'onde λ (en nm). Comme on peut l'observer, on obtient ici un spectre particulièrement plat sur le plan énergétique, et donc bien adapté à de nombreuses applications, et en particulier à la micro-spectroscopie CARS multiplex.

Sur la figure 3 se trouve illustré un exemple d'évolution de la puissance du faisceau de sortie d'un dispositif de génération DG dans les domaines du temps (en ns) et des longueurs d'onde (en nm). Cet exemple illustre l'échelonnement temporel des longueurs d'onde du faisceau de sortie FS qui permet leur identification par un simple retard temporel. Comme on peut l'observer, on obtient une répartition spectro-temporelle des photons secondaires pendant la durée de l'impulsion de pompe (photons primaires).

On notera que la source laser impulsionnelle SL peut être propre à délivrer les photons primaires dans des impulsions qui fournissent une densité de puissance par mètre de fibre optique FO induisant une génération non linéaire des photons secondaires échelonnée dans le temps en fonction de leurs longueurs d'onde respectives. On obtient alors une désymétrisation du diagramme spectro-temporel.

Dans ce cas, la dynamique de déplétion de l'effet non linéaire Raman en régime de sursaturation permet d'obtenir une répartition spectro-temporelle du rayonnement qui est fondamentalement différente de celle obtenue dans les dispositifs à fibre micro-structurée de l'art antérieur. En effet, chaque longueur d'onde du spectre peut être identifiée par un temps d'apparition différent. Le retard de génération des photons secondaires, échelonné en fonction de leurs longueurs d'onde respectives, permet d'effectuer une analyse spectroscopique grâce à un détecteur temporel comprenant, par exemple, une photodiode et un oscilloscope. Cet échelonnement dans le temps est initié par la conversion Raman en régime de sursaturation et cela pendant la durée de l'impulsion de pompe fournie par la source laser SL.

Par exemple, cette densité de puissance par mètre de fibre optique FO, qui permet de contrôler le profil du spectre, peut être choisie supérieure à 0,2 kW/µm²/m pour une impulsion d'une durée de l'ordre de 1ns. De préférence, il est même préférable de la choisir supérieure à 0,3 kW/µm²/m. De telles densités de puissance permettent en effet d'induire une saturation de l'effet Raman favorable à l'obtention d'un spectre ultraplat avec un échelonnement des longueurs d'onde dans le temps. On notera que ce temps d'échelonnement ne dépasse pas la durée totale de l'impulsion de pompe initiale.

Cet échelonnement dans le temps peut avantageusement permettre au dispositif de génération DG de délivrer un faisceau de sortie FS sous la forme d'impulsions d'une durée choisie et variable. En effet, en lui adjoignant, en aval de sa fibre optique FO, des moyens de filtrage propres à ne laisser passer que des photons secondaires ayant des longueurs d'onde comprises dans un intervalle prédéfini, il peut délivrer un faisceau de sortie FS filtré, sous la forme d'impulsions dont la durée est égale à la différence d'échelonnement dans le temps des photons secondaires dont les longueurs d'onde sont égales aux bornes de cet intervalle. On peut ainsi obtenir des impulsions de l'ordre de la nanoseconde ou de la picoseconde ou encore de la femtoseconde, selon les besoins applicatifs.

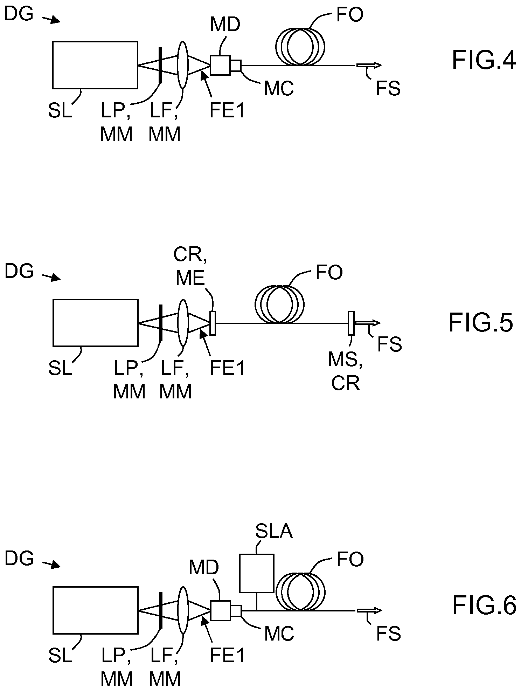

On notera également, comme illustré non limitativement dans le deuxième exemple de la figure 4, que le dispositif de génération DG comprend selon l'invention, entre sa fibre optique FO et ses moyens de mise en forme MM, des moyens de désymétrisation MD (actifs ou passifs) propres à augmenter la dissymétrie temporelle du faisceau d'entrée FE. Cela permet en effet d'augmenter l'échelonnement dans le temps.

Par exemple, ces moyens de désymétrisation MD peuvent être du type dit « à absorbant saturable » ou « à transparent saturable ». En effet, le front de montée dépend alors de la saturation de l'absorbant (ou transparent) saturable, tandis que le front de descente dépend du retour de l'absorbant (ou transparent) saturable à un état d'équilibre. En d'autres termes, le comportement différent de l'absorbant (ou transparent) saturable lors de son ouverture et de sa fermeture induit une dissymétrie sur le profil temporel de chaque impulsion.

On notera également que la fibre optique FO est de préférence de type dit monomode. Mais dans une variante de réalisation elle pourrait être de type dit multimode (notamment pour permettre le passage de plus de puissance).

On notera également que la source laser impulsionnelle SL peut être propre à délivrer les photons primaires dans des impulsions qui ont une durée comprise entre quelques centièmes de nanosecondes et quelques dizaines de nanosecondes. Pour des durées plus courtes les effets de dispersion deviennent gênants, et pour des durées plus longues on a du mal à avoir une forte puissance crête pour les impulsions.

On notera également, comme illustré non limitativement dans le troisième exemple de la figure 5, que le dispositif de génération DG peut également comprendre une cavité résonnante CR logeant sa fibre optique FO. Cette cavité résonnante CR permet une oscillation des photons secondaires propre à induire une amplification de la conversion non linéaire. Cette cavité est préférentiellement utilisée avec des impulsions primaires longues. Une telle cavité résonnante CR peut comprendre, d'une part, un miroir d'entrée ME de type dichroïque, propre à recevoir le faisceau d'entrée FE et, par exemple, auquel est solidarisée l'entrée de la fibre optique FO, et, d'autre part, un miroir de sortie MS, par exemple auquel est solidarisée la sortie de la fibre optique FO, et propre à délivrer le faisceau de sortie FS.

On notera également que la fibre optique FO peut être dopée en ions de terre rare. Dans ce cas, et comme illustré non limitativement dans le quatrième exemple de la figure 6, le dispositif de génération DG peut également comprendre une source laser auxiliaire SLA propre à injecter dans la fibre optique FO des photons auxiliaires destinés à interagir avec les ions de terre rare pour induire une amplification de la génération des photons une amplification des photons primaires qui permet alors une augmentation de la conversion vers les photons secondaires. Par exemple, la longueur d'onde d'émission de la source laser auxiliaire SLA peut être égale à 980 nm pour des ions Ytterbium (Yb) et erbium (Er), ou à 808 nm pour des ions néodyme (Nd).

L'amplification des photons primaires dans la fibre peut également augmenter ou diminuer la dissymétrie de l'impulsion primaire en amplifiant de manières différentes le front de montée et le front de descente de l'impulsion. Ce mécanisme dépend de la saturation différentielle du gain laser engendrée par les différentes parties de l'impulsion.

En variante, la fibre optique FO peut être dopée en ions propres à exacerber des effets non linéaires en son sein pour induire une augmentation de la conversion vers les photons secondaires. Ces ions peuvent, par exemple, être en germanium.

L'invention offre plusieurs avantages, parmi lesquels :
- elle permet d'obtenir un (super-)continuum avec une forte densité spectrale de puissance du fait que la section transverse du cœur de la fibre optique utilisée est plus importante que la section transverse d'un cœur de fibre optique micro-structurée non linéaire,
- elle permet de résoudre les problèmes de fluctuation d'énergie dans les sources de (super-)continuum à base de fibres optiques micro-structurées,
- elle permet d'améliorer la cohérence du rayonnement large bande qui est généralement détériorée par des propagations solitoniques dans les sources de (super-)continuum à base de fibres optiques micro-structurées,
- elle permet d'utiliser des fibres optiques moins onéreuses que celles possédant une structure périodique transverse.
- elle permet d'obtenir une répartition spectro-temporelle spécifique.

L'invention a été illustrée et décrite en détail dans les dessins et la description précédente. Celle-ci doit être considérée comme illustrative et donnée à titre d'exemple et non comme limitant l'invention a cette seule description, ladite invention étant délimitée par la portée des revendications jointes.

## Revendications

1. Dispositif (DG) de génération d'un faisceau de photons polychromatique, ledit dispositif (DG) comprenant une source laser impulsionnelle (SL) propre à délivrer des photons primaires présentant une longueur d'onde, des moyens de mise en forme (MM) propres à agir sur lesdits photons primaires pour délivrer un faisceau d'entrée focalisé et ayant une polarisation choisie, et une fibre optique (FO) agencée pour produire un faisceau de sortie polychromatique comprenant des photons secondaires présentant plusieurs longueurs d'onde à partir dudit faisceau d'entrée, **caractérisé en ce que** ladite source laser impulsionnelle (SL) est propre à délivrer lesdits photons primaires dans des impulsions ayant une dissymétrie temporelle propre à induire des photons secondaires présentant différentes longueurs d'onde résultant d'une cascade de conversions Raman, et constituant un faisceau de sortie à spectre large et ayant une énergie répartie de manière sensiblement constante, ledit dispositif comprenant, entre ladite fibre optique (FO) et lesdits moyens de mise en forme (MM), des moyens de désymétrisation (MD) propres à augmenter ladite dissymétrie temporelle dudit faisceau d'entrée.

2. Dispositif selon la revendication 1, **caractérisé en ce que** ladite source laser impulsionnelle (SL) est propre à fournir une densité de puissance par mètre de fibre optique (FO) induisant une génération non linéaire desdits photons secondaires échelonnée dans le temps en fonction de leurs longueurs d'onde respectives.

3. Dispositif selon la revendication 2, **caractérisé en ce que** ladite densité de puissance par mètre de fibre optique (FO) est supérieure à 0,2 kW/µm²/m.

4. Dispositif selon l'une des revendications 2 et 3, **caractérisé en ce qu'**il comprend des moyens de filtrage installés en aval de ladite fibre optique (FO) et propres à ne laisser passer que des photons secondaires ayant des longueurs d'onde comprises dans un intervalle prédéfini, afin de délivrer un faisceau de sortie filtré sous la forme d'impulsions d'une durée égale à leur différence d'échelonnement dans le temps.

5. Dispositif selon l'une des revendications 1 à 4, **caractérisé en ce que** ladite fibre optique (FO) est de type dit monomode.

6. Dispositif selon l'une des revendications 1 à 5, **caractérisé en ce que** ladite source laser impulsionnelle (SL) est propre à délivrer lesdits photons primaires dans des impulsions ayant une durée comprise entre quelques centièmes de nanosecondes et quelques dizaines de nanosecondes.

7. Dispositif selon l'une des revendications 1 à 6, **caractérisé en ce qu'**il comprend une cavité résonnante (CR) comportant i) un miroir d'entrée (ME) de type dichroïque et propre à recevoir ledit faisceau d'entrée, et auquel est solidarisée une entrée de ladite fibre optique (FO), et ii) un miroir de sortie (MS) propre à délivrer ledit faisceau de sortie.

8. Dispositif selon l'une des revendications 1 à 7, **caractérisé en ce que** ladite fibre optique (FO) est dopée en ions de terre rare, et **en ce qu'**il comprend une source laser auxiliaire (SLA) propre à injecter dans ladite fibre optique (FO) des photons auxiliaires destinés à interagir avec lesdits ions de terre rare pour induire une amplification de la génération desdits photons primaires permettant alors une augmentation de la conversion vers les photons secondaires.

9. Dispositif selon l'une des revendications 1 à 8, **caractérisé en ce que** ladite fibre optique (FO) est dopée en ions propres à exacerber des effets non linéaires dans ladite fibre optique (FO) pour induire une augmentation de la conversion vers lesdits photons secondaires.

10. Système d'analyse d'échantillon, **caractérisé en ce qu'**il comprend au moins un dispositif de génération (DG) selon l'une des revendications précédentes, propre à fournir un faisceau de sortie polychromatique pour analyser ledit échantillon.

11. Système selon la revendication 10, **caractérisé en ce qu'**il est propre à effectuer une analyse dudit échantillon par diffusion Raman antistokes cohérente multiplex.

12. Système selon la revendication 11, **caractérisé en ce qu'**il comprend un détecteur temporel.

## Patentansprüche

1. Vorrichtung (DG) zur Erzeugung eines polychromatischen Photonenstrahls, wobei die Vorrichtung (DG) eine Impuls-Laserquelle (SL) umfasst, welche geeignet ist, primäre Photonen abzugeben, welche eine Wellenlänge aufweisen, Mittel zum Informbringen (MM), welche geeignet sind, auf die primären Photonen einzuwirken, um einen fokussierten Eingangsstrahl abzugeben, welcher eine gewählte Polarisation aufweist, und eine optische Faser (FO), welche angeordnet ist, um einen polychromatischen Ausgangsstrahl zu erzeugen, welcher sekundäre Photonen umfasst, welche mehrere Wellenlängen aufweisen, anhand des Eingangsstrahls, **dadurch gekennzeichnet, dass** die Impuls-Laserquelle (SL) geeignet ist, die primären Photonen in Impulsen abzugeben, welche eine zeitliche Asymmetrie aufweisen, welche geeignet ist, sekundäre Photonen zu induzieren, welche unterschiedliche Wellenlängen aufweisen, welche aus einer Kaskade von Raman-Umwandlungen resultieren, und welche einen Ausgangsstrahl mit breitem Spektrum bilden, welcher eine im Wesentlichen konstant verteilte Energie aufweist, wobei die Vorrichtung zwischen der optischen Faser (FO) und den Mitteln zum Informbringen (MM) Desymmetrierungsmittel (MD) umfasst, welche geeignet sind, die zeitliche Asymmetrie des Eingangsstrahls zu erhöhen.

2. Vorrichtung nach Anspruch 1, **dadurch gekennzeichnet, dass** die Impuls-Laserquelle (SL) geeignet ist, eine Leistungsdichte pro Meter der optischen Faser (FO) bereitzustellen, welche eine nicht-lineare Erzeugung der sekundären Photonen induziert, welche zeitlich angesichts ihrer jeweiligen Wellenlängen gestaffelt ist.

3. Vorrichtung nach Anspruch 2, **dadurch gekennzeichnet, dass** die Leistungsdichte pro Meter der optischen Faser (FO) 0,2 kW/µm²/m überschreitet.

4. Vorrichtung nach einem der Ansprüche 2 und 3, **dadurch gekennzeichnet, dass** sie Filterungsmittel umfasst, welche im nachgelagerten Bereich der optischen Faser (FO) installiert und geeignet sind, nur sekundäre Photonen durchzulassen, welche Wellelängen innerhalb eines vorbestimmten Intervalls aufweisen, um einen gefilterten Ausgangsstrahl in der Form von Impulsen einer Dauer gleich ihrer zeitlichen Staffelungsdifferenz abzugeben.

5. Vorrichtung nach einem der Ansprüche 1 bis 4, **dadurch gekennzeichnet, dass** die optische Faser (FO) eine Faser vom sogennanten Typ Monomode ist.

6. Vorrichtung nach einem der Ansprüche 1 bis 5, **dadurch gekennzeichnet, dass** die Impuls-Laserquelle (SL) geeignet ist, die primäre Photonen in Impulsen abzugeben, welche eine Dauer zwischen einigen Hundertstel-Nanosekunden und einigen Zehn Nanosekunden aufweisen.

7. Vorrichtung nach einem der Ansprüche 1 bis 6, **dadurch gekennzeichnet, dass** sie einen Resonanzhohlraum (CR) umfasst, welcher i) einen Eingangsspiegel (ME) vom Typ dichroitisch umfasst, welcher geeignet ist, den Eingangsstrahl aufzunehmen, und mit welchem ein Eingang der optischen Faser (FO) fest verbunden ist, und ii) einen Ausgangsspiegel (MS), welcher geeignet ist, den Ausgangsstrahl abzugeben.

8. Vorrichtung nach einem der Ansprüche 1 bis 7, **dadurch gekennzeichnet, dass** die optische Faser (FO) mit Seltenerden-Ionen dotiert ist, und dadurch, dass sie eine Hilfs-Laserquelle (SLA) umfasst, welche geeignet ist, in die optische Faser (FO) Hilfsphotonen einzuspeisen, welche dazu bestimmt sind, mit den Seltenerden-Ionen zu interagieren, um eine Verstärkung der Erzeugung der primären Photonen zu induzieren, welche folglich eine Erhöhung der Umwandlung in die sekundären Photonen ermöglicht.

9. Vorrichtung nach einem der Ansprüche 1 bis 8, **dadurch gekennzeichnet, dass** die optische Faser (FO) mit Ionen dotiert ist, welche geeignet sind, nicht-lineare Effekte in der optischen Faser (FO) zu verstärken, um eine Erhöhung der Umwandlung in die sekundären Photonen zu induzieren.

10. Probenanalysesystem, **dadurch gekennzeichnet, dass** es mindestens eine Erzeugungsvorrichtung (DG) nach einem der vorhergehenden Ansprüche umfasst, welche geeignet ist, einen polychromatischen Ausgangsstrahl zum Analysieren der Probe bereitzustellen.

11. System nach Anspruch 10, **dadurch gekennzeichnet, dass** es geeignet ist, eine Analyse der Probe durch kohärente anti-Stokes Raman-Multiplex-Streuung vorzunehmen.

12. System nach Anspruch 11, **dadurch gekennzeichnet, dass** es einen zeitlichen Detektor umfasst.

## Claims

1. A device (DG) for generating a polychromatic beam of photons, the device (DG) comprising a pulsed laser source (SL) suitable to deliver primary photons having a wavelength, forming means (MM) suitable to act on said primary photons to deliver a focused input beam having a chosen polarization, and an optical fiber (FO) that is arranged to produce, from said input beam, a polychromatic output beam comprising secondary photons having several wavelengths, **characterized in that** said pulsed laser source (SL) is suitable to deliver said primary photons in pulses having a temporal asymmetry suitable to induce secondary photons having various wavelengths, resulting from a cascade of Raman conversions, and forming a broad-spectrum output beam having an energy that is distributed substantially constantly, said device comprising, between said optical fiber (FO) and said forming means (MM), desymmetrization means (MD) suitable to increase said temporal asymmetry of said input beam.

2. Device according to claim 1, **characterized in that** said pulsed laser source (SL) is suitable to deliver a power density per meter of optical fiber (FO) that induces a non-linear generation of said secondary photons that is spread over time depending on their respective wavelengths.

3. Device according to claim 2, **characterized in that** said power density per meter of optical fiber (FO) is higher than 0.2 kW/µm²/m.

4. Device according to any one of claims 2 and 3, **characterized in that** it comprises filter means installed downstream of said optical fiber (FO) and suitable to let pass only secondary photons having wavelengths comprised in a predefined interval, in order to deliver a filtered output beam having the form of pulses of a duration equal to their difference in spread over time.

5. Device according to any one of claims 1 to 4, **characterized in that** said optical fiber (FO) is of so-called single-mode type.

6. Device according to any one of claims 1 to 5, **characterized in that** said pulsed laser source (SL) is suitable to deliver said primary photons in pulses having a duration comprised between a few hundred nanoseconds and a few tens of nanoseconds.

7. Device according to any one of claims 1 to 6, **characterized in that** it comprises a resonant cavity (CR) comprising i) a dichroic type entrance mirror (ME) suitable to receive said input beam, and to which an entrance of said optical fiber (FO) is securely fastened, and ii) an exit mirror (MS) suitable to deliver said output beam.

8. Device according to any one of claims 1 to 7, **characterized in that** said optical fiber (FO) is doped with rare-earth ions, and that it comprises an auxiliary laser source (SLA) that is suitable to inject, into said optical fiber (FO), auxiliary photons that are intended to interact with said rare-earth ions in order to induce an amplification of the generation of said primary photons, so as to then allow an increase in the conversion to secondary photons.

9. Device according to any one of claims 1 to 8, **characterized in that** said optical fiber (FO) is doped with ions that are suitable to exacerbate non-linear effects in said optical fiber (FO) in order to induce an increase in the conversion to said secondary photons.

10. Sample-analyzing system, **characterized in that** it comprises at least one generating device (DG) according to any preceding claim, suitable to deliver a polychromatic output beam for analyzing said sample.

11. System according to claim 10, **characterized in that** it is suitable to carry out an analysis of said sample by multiplex coherent anti-Stokes Raman scattering.

12. System according to claim 11, **characterized in that** it comprises a temporal detector.
